(19) Europäisches Patentamt
European Patent Office
Office européen des brevets

(11) EP 3 266 818 B1

(12) **EUROPEAN PATENT SPECIFICATION**

(45) Date of publication and mention of the grant of the patent:
**02.01.2019 Bulletin 2019/01**

(21) Application number: **16758633.8**

(22) Date of filing: **01.03.2016**

(51) Int Cl.:
***C08C 19/22*** *(2006.01)*
***C08L 9/06*** *(2006.01)*
***B60C 1/00*** *(2006.01)*
***C08F 8/42*** *(2006.01)*
***C08K 3/36*** *(2006.01)*
***C08K 5/103*** *(2006.01)*
***C08F 297/04*** *(2006.01)*
***C08L 53/02*** *(2006.01)*
***C08C 19/25*** *(2006.01)*
***C08L 15/00*** *(2006.01)*

(86) International application number:
**PCT/JP2016/001105**

(87) International publication number:
**WO 2016/139935 (09.09.2016 Gazette 2016/36)**

(54) **RUBBER COMPOSITION AND TIRE**

KAUTSCHUKZUSAMMENSETZUNG UND REIFEN

COMPOSITION DE CAOUTCHOUC ET PNEUMATIQUE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2015 JP 2015044004**

(43) Date of publication of application:
**10.01.2018 Bulletin 2018/02**

(73) Proprietor: **Bridgestone Corporation**
**Tokyo 104-8340 (JP)**

(72) Inventors:
- **NAKATANI, Kenji**
**Tokyo 104-8340 (JP)**
- **YABE, Yudai**
**Tokyo 104-8340 (JP)**

(74) Representative: **Oxley, Robin John George**
**Marks & Clerk LLP**
**90 Long Acre**
**London WC2E 9RA (GB)**

(56) References cited:
**WO-A1-00/32684**
**WO-A1-2014/014052**
**WO-A1-2014/014052**
**JP-A- 2012 214 711**
**JP-A- 2013 237 766**
**JP-A- 2013 245 248**
**JP-A- 2015 196 760**
**JP-A- 2016 006 153**
**JP-A- 2016 065 188**
**US-A1- 2014 088 256**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 266 818 B1

**Description**

TECHNICAL FIELD

This disclosure relates to a rubber composition and a tire.

BACKGROUND

Recently, relating to the currency of global carbon dioxide emission limits accompanying increased concerns with environment problems, requirement for fuel consumption reduction of automobiles is increasing. In order to satisfy such requirement, with respect to tire performances, reduction of rolling resistance is desired as well. Conventionally, as a method for reducing rolling resistance of tire, optimization of tire structure has been studied. However, currently performed as an ordinary method is to use an excellent one with low tan $\delta$ and low heat generation (hereinafter referred to as "low loss property") as a rubber composition applied in a tire.

As a method for obtaining such rubber composition with excellent low loss property, considered is reduction of fillers such as carbon black, silica and the like, or use of carbon black with large particle size, etc. However, in the case of applying these techniques for the purpose of improvement of low loss property, there was a problem that it is impossible to avoid deterioration of reinforcing performance and wear resistance of the rubber composition.

As a method for obtaining a rubber composition excellent in low loss property, various techniques have been developed for improving the dispersibility of fillers in the rubber composition. Among such techniques, particularly effective is a method of modifying with a functional group capable of interacting with a filler a polymerization active site of a conjugated diene-based polymer obtained via anionic polymerization by using alkyllithium.

For example, PTL1 discloses a method of using carbon black as a filler, and using a modified conjugated diene-based polymer with both polymerization active terminals modified with a tin compound as a rubber component.

CITATION LIST

Patent Literature

PTL1 JPH0649079A

SUMMARY

(Technical Problem)

However, in the case of using the modified conjugated diene-based polymer as disclosed in PTL1, although dispersibility improvement effect of filler due to such modified conjugated diene-based polymer is found in rubber compositions for low fuel consumption tires with a small compounding amount of fillers and softeners, dispersibility improvement effect of fillers due to such modified conjugated diene-based polymer is not sufficiently exhibited in rubber compositions for general-purpose tires with a large compounding amount of fillers and softeners, and it is still impossible to maintain the processability, etc. and simultaneously obtain desired low loss property and wear resistance.

Then, this disclosure is to provide a rubber composition excellent in low loss property and wear resistance without deteriorating the processability. Moreover, this disclosure is to provide a tire excellent in low loss property and wear resistance without deteriorating the processability during production.

(Solution to Problem)

In order to achieve the aforementioned purpose, we have intensively studied rubber compositions containing a rubber component having a diene-based polymer, and containing a silica. We discovered that by disposing a modified functional group capable of interacting with silica merely in a specific range of a diene-based polymer for forming a rubber component (specifically, a range of 1/4 of the entire chain length from at least one terminal), the affinity of the modified diene-based polymer and the silica is greatly improved, and it is possible to obtain extremely excellent low loss property and wear resistance.

However, although the aforementioned modified diene-based polymer is capable of achieving excellent low loss property, there is a problem that if directly applied to a rubber composition, the rubber pastiness is deteriorated, and it is impossible to obtain sufficient processability. Therefore, after further intensive study, we discovered that by further compounding a specific glycerin fatty acid ester composition in the rubber composition, it is possible to reduce the unvulcanized rubber viscosity, and to improve the low loss property and the wear resistance without deteriorating

the rubber pastiness or the processability.

The rubber composition of this disclosure is a rubber composition containing a rubber component having a diene-based polymer, a silica, and a glycerin fatty acid ester composition, wherein: the diene-based polymer has 3 or more modified functional groups capable of interacting with the silica merely within a range of 1/4 of an entire chain length from a terminal, and has at least one monomer structural unit of a diene-based polymer among the modified functional groups; and the glycerin fatty acid ester composition has a glycerin fatty acid monoester and a glycerin fatty acid diester of C8 to C28 fatty acids, and a content of the glycerin fatty acid ester composition is 0.5 to 15 parts by mass per 100 parts by mass of the rubber component, and wherein each modified functional group is nitrogen-containing functional group, silicon-containing functional group or oxygen-containing functional group.

According to the aforementioned structure, it is possible to achieve excellent low loss property and wear resistance without deteriorating the processability.

In the rubber composition of this disclosure, it is preferable that a content of the glycerin fatty acid monoester in the glycerin fatty acid ester composition is more than 85 mass%. This is because that it is possible to further improve the dispersibility of silica, and to achieve more excellent low loss property and wear resistance.

The rubber composition of this disclosure preferably further contains an activator containing at least one selected from vulcanization accelerators of guanidines, sulfenamides, thiazoles, thiurams, thioureas, dithiocarbamic acids or xanthic acids; cysteines, thiourea, ammonium thiocyanate and zinc dialkyl dithiophosphate. This is because that it is possible to further improve the processability.

In the rubber composition of this disclosure, it is preferable that the activator is thiourea or diethylthiourea, is dimercaptothiadiazole, or is diphenylguanidine. This is because that it is possible to further improve the processability.

In the rubber composition of this disclosure, it is preferable that a content of the silica is 60 to 250 parts by mass per 100 parts by mass of the rubber component. This is because that it is possible to achieve more excellent low loss property and wear resistance.

In the rubber composition of this disclosure, it is preferable that the diene-based polymer has monomer structural units of the diene-based polymer at all points among the modified functional groups. This is because that it is possible to achieve more excellent low loss property and wear resistance.

In the rubber composition of this disclosure, the modified functional group is nitrogen-containing functional group, silicon-containing functional group or oxygen-containing functional group. This is because that it is possible to achieve excellent low loss property and wear resistance more securely.

In the rubber composition of this disclosure, it is preferable that a peak molecular weight of the diene-based polymer is 50,000 to 700,000. This is because that it is possible to achieve more excellent breaking resistance and wear resistance, and to obtain excellent processability.

In the rubber composition of this disclosure, it is preferable that the diene-based polymer is generated by forming a molecular chain of a diene-based polymer without the modified functional groups, and forming a molecular chain including the functional groups and the monomer structural unit of the diene-based polymer. This is because that it is possible to securely obtain a diene-based polymer capable of achieving excellent low loss property and wear resistance.

In the rubber composition of this disclosure, it is preferable that the molecular chain including the functional groups and the monomer structural unit of the diene-based polymer is formed by alternatively or simultaneously adding a monomer component of the diene-based polymer and a modifier, or, that the molecular chain including the modified functional groups and the monomer structural unit of the diene-based polymer is formed by alternatively or simultaneously adding a monomer component of the diene-based polymer, and a compound having a site capable of copolymerizing with the monomer component and capable of chemically reacting with a modified functional group including compound and thereby introduced modified functional groups. This is because that it is possible to further securely obtain a diene-based polymer having 3 or more modified functional groups capable of interacting with the silica merely within a range of 1/4 of the entire chain length from a terminal.

The tire of this disclosure uses the aforementioned rubber composition.

Due to the aforementioned configuration, it is possible to achieve excellent low loss property and wear resistance without deteriorating the processability during production.

(Advantageous Effect)

According to this disclosure, it is possible to provide a rubber composition excellent in low loss property and wear resistance, without deteriorating the processability. Moreover, according to this disclosure, it is possible to provide a tire excellent in low loss property and wear resistance without deteriorating the processability during production.

DETAILED DESCRIPTION

<Rubber composition>

Hereinafter, with respect to the rubber composition of this disclosure, an embodiment is described in details.

The rubber composition of this disclosure is a rubber composition containing a rubber component having a diene-based polymer, a silica, and a glycerin fatty acid ester composition.

(Rubber component)

The rubber component contained in the rubber composition of this disclosure has a diene-based polymer. This diene-based polymer has 3 or more modified functional groups capable of interacting with the silica merely within a range of 1/4 of an entire chain length from its terminal, and has at least one monomer structural unit of a diene-based polymer among the modified functional groups.

By disposing the modified functional groups merely within a range of 1/4 of the entire chain length from a terminal of the diene-based polymer, and inserting the monomer structural unit of the diene-based polymer between the modified functional groups, as compared to the case of using conventional modified polymers, the reaction between the silica and the modified functional groups in the diene-based polymer for forming the rubber component is performed efficiently, and as a result, it is possible to greatly improve the low loss property and the wear resistance of the rubber composition.

Here, the diene-based polymer having modified functional groups may be either a modified diene copolymer, or a modified diene homopolymer. Among these, the monomer structural unit of the diene-based polymer is preferably a copolymer of a diene-based monomer and an aromatic vinyl compound or a homopolymer of a diene-based monomer, and more preferably a polymer (homopolymer) or copolymer formed by polymerizing 60 to 100 mass% of a diene-based monomer and 0 to 40 mass% of an aromatic vinyl compound. This is because that it is possible to further improve the low loss property and the wear resistance of the rubber composition.

The diene-based monomer is exemplified as conjugated diene compounds such as 1,3-butadiene, isoprene, 1,3-pentadiene, 2,3-dimethylbutadiene, 2-phenyl-1,3-butadiene, 1,3-hexadiene and the like, and among these, 1,3-butadiene is specifically preferable. These diene-based monomers may be used singly or in a combination of two or more.

On the other hand, the aromatic vinyl compound as a monomer is exemplified as styrene, α-methylstyrene, 1-vinylnaphthalene, 3-vinyltoluene, ethylvinylbenzene, divinylbenzene, 4-cyclohexylstyrene and 2,4,6-trimethylstyrene, etc., and among these, styrene is specifically preferable. These aromatic vinyl compounds may be used singly or in a combination of two or more.

Here, the modified functional groups capable of interacting with the silica refer to functional groups capable of either forming covalent bonds between the functional groups and the silica surface, or forming an intermolecular force weaker than the covalent bond (an electromagnetic force functioning between molecules, such as ion-dipole interaction, dipole-dipole interaction, hydrogen bond, Van der Waals force and the like). The modified functional group is nitrogen-containing functional groups, silicon-containing functional groups or oxygen-containing functional groups.

The state having 3 or more of the modified functional groups within a range of 1/4 of the entire chain length from a terminal refers to a state where 3 or more of the modified functional group exist within a range of 1/4 from a terminal (tip) in the diene-based polymer (a range of 25% in the entire chain length from the terminal), and no modified functional groups exist in the part other than 1/4 from the terminal.

Here, the terminal of the diene-based polymer refers to at least either one of the terminals, and the range having the modified functional groups may be either a range of 1/4 of the entire chain length from one terminal (tip), or a range of respectively 1/4 of the entire chain length from both terminals of the diene-based polymer. However, from the viewpoint of efficiently obtaining the performances of the diene-based polymer itself and the performances due to modification, it is preferable to exist on merely one terminal.

By having 3 or more modified functional groups within a range of 1/4 of the entire chain length from a terminal of the diene-based polymer, as compared to conventional modified diene-based polymers having the same modified functional groups, it is possible to improve the affinity with fillers, particularly with silica, and to greatly improve the low loss property and the wear resistance of the rubber composition.

As mentioned above, the state having at least one monomer structural unit of a diene-based polymer among the modified functional groups refers to a state that with respect to each functional group existing within a range of 1/4 of the entire chain length from a terminal of the diene-based polymer, a monomer structural unit of a diene-based polymer is bonded between a modified functional group and another modified functional group (for example, 1,3-butadiene in the case where the diene-based polymer is polybutadiene, and styrene and/or 1,3-butadiene in the case of styrene-butadiene copolymer), while the modified functional groups are not bonded to each other.

By applying a structure such that the modified functional groups are not bonded to each other within the range

of 1/4 of the entire chain length from a terminal of the diene-based polymer, it is possible to further improve the affinity with silica, and thus it is possible to achieve more excellent low loss property and wear resistance.

Furthermore, from the same viewpoint, it is preferable to have the monomer structural unit of the diene-based polymer at all points among the modified functional groups within the range of 1/4 of the entire chain length from a terminal of the diene-based polymer (i.e., no modified functional groups are directly bonded to each other in the diene-based polymer).

As a polymerization method for obtaining the diene-based polymer, any one of anionic polymerization, coordination polymerization and emulsion polymerization may be used. The modifier may be either a modifier reacting with polymerization active terminals of anionic polymerization or coordination polymerization, or an amide moiety of a lithium amide compound used as a polymerization initiator. Moreover, in emulsion polymerization, the modifier may be copolymerized as a monomer.

Here, the peak molecular weight of the diene-based polymer is not specifically limited, but if the peak molecular weight is 50,000 or more, it is possible to obtain more excellent breaking resistance and wear resistance, and if 700,000 or less, it is possible to obtain an excellent processability. Therefore, 50,000 to 700,000 is preferable. Moreover, in order to obtain an excellent processability and to simultaneously obtain an excellent breaking resistance and wear resistance, a peak molecular weight of 100,000 to 350,000 is desirable.

The content of the diene-based polymer in the rubber component is preferably 10 mass% or more. This is because that if the content of the diene-based polymer in the rubber component is less than 10 mass%, the improvement effect to the dispersibility of the filler is poor, and thus the improvement effect to the low loss property and the wear resistance of the rubber composition is poor.

Here, the modifier used in the modification when obtaining the diene-based polymer is described.

The modifier is a modifier containing functional groups with interactivity with silica, and is preferably a modifier having at least one atom selected from nitrogen atom, silicon atom and oxygen atom.

From the viewpoint of having a high affinity with the silica, the modifier is preferably an alkoxysilane compound.

Further, the alkoxysilane compound is not specifically limited, but is more preferably an alkoxysilane compound expressed with the following general formula (I).

[Formula 1]

$$R^1{}_a\text{-Si-}(OR^2)_{4-a} \cdots \qquad (I)$$

(In the formula, $R^1$ and $R^2$ independently represent a C1 to C20 monovalent aliphatic hydrocarbon group or a C6 to C18 monovalent aromatic hydrocarbon group, and in the case where a is an integer of 0 to 2 and $OR^2$ is plural, the plurality of $OR^2$ may be either identical to or different from each other. Moreover, the molecule does not contain active proton.)

Here, the alkoxysilane compound expressed with the following general formula (I) is specifically exemplified as tetramethoxysilane, tetraethoxysilane, tetra-n-propoxysilane, tetraisopropoxysilane, tetra-n-butoxysilane, tetraisobutoxysilane, tetra-sec-butoxysilane, tetra-tert-butoxysilane, methyltrimethoxysilane, methyltriethoxysilane, methyltripropoxysilane, methyltriisopropoxysilane, ethyltrimethoxysilane, ethyltriethoxysilane, ethyltripropoxysilane, ethyltriisopropoxysilane, propyltrimethoxysilane, propyltriethoxysilane, propyltripropoxysilane, propyltriisopropoxysilane, butyltrimethoxysilane, butyltriethoxysilane, phenyltrimethoxysilane, phenyltriethoxysilane, dimethoxydimethylsilane, methylphenyldimethoxysilane, dimethyldiethoxysilane, vinyltrimethoxysilane, vinyltriethoxysilane, divinyldiethoxysilane, etc., among which tetraethoxysilane, methyltriethoxysilane and dimethyldiethoxysilane are preferable. These may be used singly or in a combination of two or more.

From the viewpoint of having a high affinity with the silica, the modifier may be a hydrocarbyl oxysilane compound other than alkoxysilane compound.

Further, the hydrocarbyl oxysilane compound is preferably a s compound represented with the following general formula (III).

[Formula 2]

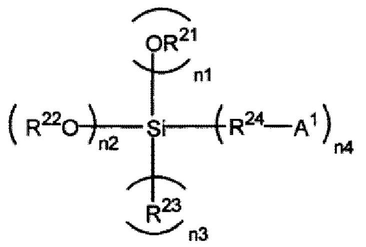

· · · (III)

In the general formula (III), n1+n2+n3+n4=4 (where n1, n2, n3 and n4 are integers of 0 to 4, and n1+n2=an integer of 1 or more); $A^1$ is at least one functional group selected from saturated cyclic tertiary amine compound residual group, unsaturated cyclic tertiary amine compound residual group, ketimine residual group, nitrile group, (thio)isocyanate group (representing isocyanate group or thioisocyanate group; the same hereinafter.), (thio)epoxy group, trihydrocarbyl isocyanurate group, dihydrocarbyl carbonate group, nitrile group, pyridine group, (thio)ketone group, (thio) aldehyde group, amide group, (thio)carboxylate group, metallic salt of (thio)carboxylate, carboxylic anhydride residual group, carboxylic halide residual group, and primary or secondary amide group or mercapto group having hydrolyzable group; $R^{21}$ is a C1 to C20 monovalent aliphatic or alicyclic hydrocarbon group or a C6 to C18 monovalent aromatic hydrocarbon group, and may be either identical or different when n1 is 2 or more; $R^{23}$ is a C1 to C20 monovalent aliphatic or alicyclic hydrocarbon group, a C6 to C18 monovalent aromatic hydrocarbon group or a halogen atom (fluorine, chlorine, bromine, iodine), and may be either identical or different when n3 is 2 or more; $R^{22}$ is a C1 to C20 monovalent aliphatic or alicyclic hydrocarbon group or a C6 to C18 monovalent aromatic hydrocarbon group, either one of which may contain a nitrogen atom and/or a silicon atom, and may be either identical or different, or form a ring together when n2 is 2 or more; and $R^{24}$ is a C1 to C20 divalent aliphatic or alicyclic hydrocarbon group, or a C6 to C18 divalent aromatic hydrocarbon group, and may be either identical or different when n4 is 2 or more.

The hydrolyzable group in the primary or secondary amino group having hydrolyzable group or the mercapto group having hydrolyzable group is preferably trimethylsilyl group or tert-butyl dimethylsilyl group, more preferably trimethylsilyl group.

Further, in this disclosure, the "C1 to C20 monovalent aliphatic or alicyclic hydrocarbon group" refers to "C1 to C20 monovalent aliphatic hydrocarbon group or C3 to C20 monovalent alicyclic hydrocarbon group". The same goes with the case of divalent hydrocarbon group.

The hydrocarbyl oxysilane compound represented with the general formula (III) is preferably a hydrocarbyl oxysilane compound represented with the following general formula (IV).

[Formula 3]

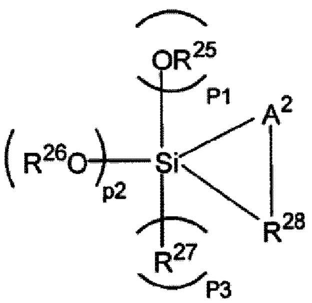

· · · (IV)

In the general formula (IV), p1+p2+p3=2 (where p1, p2 and p3 are integers of 0 to 2, and p1+p2=an integer of 1 or more); $A^2$ is NRa (Ra is a monovalent hydrocarbon group, hydrolyzable group or nitrogen-containing organic group. As a hydrolyzable group, trimethylsilyl group or tert-butyldimethylsilyl group is preferable, and trimethylsilyl group is more preferable.) or sulfur; $R^{25}$ is a C1 to C20 monovalent aliphatic or alicyclic hydrocarbon group, or a C6 to C18 monovalent aromatic hydrocarbon group; $R^{27}$ is a C1 to C20 monovalent aliphatic or alicyclic hydrocarbon group, a C6 to C18 monovalent aromatic hydrocarbon group, or a halogen atom (fluorine, chlorine, bromine, iodine); $R^{26}$ is a C1 to C20 monovalent aliphatic or alicyclic hydrocarbon group, a C6 to C18 monovalent aromatic hydrocarbon group, or a nitrogen-containing organic group, any one of which may contain a nitrogen atom and/or a silicon atom, and may be either identical or different, or form a ring together when p2 is 2; and $R^{28}$ is a C1 to C20 divalent aliphatic or alicyclic hydrocarbon group or a C6 to C18 divalent aromatic hydrocarbon group.

The hydrocarbyl oxysilane compound represented with the general formula (IV) is more preferably a hydrocarbyl oxysilane compound represented with the following general formula (V) or (VI).

[Formula 4]

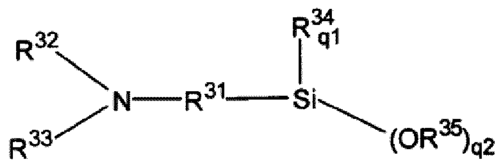

· · · (V)

In the general formula (V), q1+q2=3 (where q1 is an integer of 0 to 2, q2 is an integer of 1 to 3); $R^{31}$ is a C1 to C20 divalent aliphatic or alicyclic hydrocarbon group or a C6 to C18 divalent aromatic hydrocarbon group; $R^{32}$ and $R^{33}$ are independently a hydrolyzable group, a C1 to C20 monovalent aliphatic or alicyclic hydrocarbon group, or a C6 to C18 monovalent aromatic hydrocarbon group; $R^{34}$ is a C1 to C20 monovalent aliphatic or alicyclic hydrocarbon group or a C6 to C18 monovalent aromatic hydrocarbon group, and may be either identical or different when q1 is 2; $R^{35}$ is a C1 to C20 monovalent aliphatic or alicyclic hydrocarbon group, or a C6 to C18 monovalent aromatic hydrocarbon group, and may be either identical or different when q2 is 2 or more.

[Formula 5]

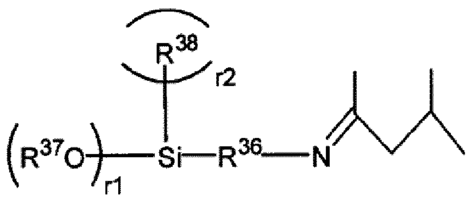

· · · (VI)

In the general formula (VI), r1+r2=3 (where r1 is an integer of 1 to 3, and r2 is an integer of 0 to 2); $R^{36}$ is a C1 to C20 divalent aliphatic or alicyclic hydrocarbon group or a C6 to C18 divalent aromatic hydrocarbon group; $R^{37}$ is dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, C1 to C20 monovalent aliphatic or alicyclic hydrocarbon group, or C6 to C18 monovalent aromatic hydrocarbon group, and may be either identical or different when r1 is 2 or more; $R^{38}$ is a C1 to C20 hydrocarbyloxy group, a C1 to C20 monovalent aliphatic or alicyclic hydrocarbon group, or a C6 to C18 monovalent aromatic hydrocarbon group, and may be either identical or different when r2 is 2.

The modifier is preferably a hydrocarbyl oxysilane compound having 2 or more nitrogen atoms represented with the following general formula (VII) or (VIII).

[Formula 6]

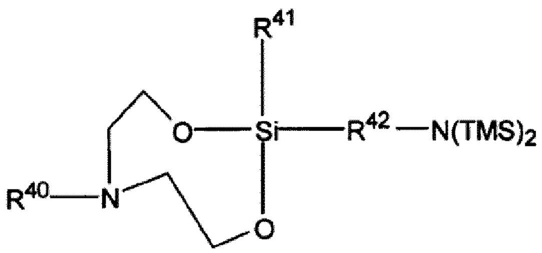

· · · (VII)

In general formula (VII), TMS is trimethylsilyl group, $R^{40}$ is trimethylsilyl group, a C1 to C20 monovalent aliphatic or alicyclic hydrocarbon group, or a C6 to 18 monovalent aromatic hydrocarbon group; $R^{41}$ is a C1 to C20 hydrocarbyloxy group, a C1 to C20 monovalent aliphatic or alicyclic hydrocarbon group, or a C6 to C18 monovalent aromatic hydrocarbon group; and $R^{42}$ is a C1 to C20 divalent aliphatic or alicyclic hydrocarbon group, or a C6 to C18 divalent aromatic hydrocarbon group.

[Formula 7]

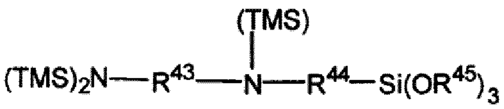

· · · (VIII)

In the general formula (VIII), TMS is a trimethylsilyl group, $R^{43}$ and $R^{44}$ are independently a C1 to C20 divalent aliphatic or alicyclic hydrocarbon group or a C6 to C18 divalent aromatic hydrocarbon group; $R^{45}$ is a C1 to C20 monovalent aliphatic or alicyclic hydrocarbon group or a C6 to C18 monovalent aromatic hydrocarbon group, and the plurality of $R^{45}$ may be identical or different.

The hydrocarbyl oxysilane compound represented with the general formula (III) is preferably a hydrocarbyl oxysilane compound the represented with the general formula (IX).

[Formula 8]

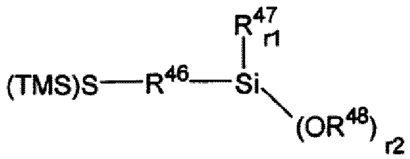

· · · (IX)

In the general formula (IX), r1+r2=3 (where r1 is an integer of 0 to 2, and r2 is an integer of 1 to 3); TMS is trimethylsilyl group; $R^{46}$ is a C1 to C20 divalent aliphatic or alicyclic hydrocarbon group or a C6 to 18 divalent aromatic hydrocarbon group; $R^{47}$ and $R^{48}$ are independently a C1 to C20 monovalent aliphatic or alicyclic hydrocarbon group or a C6 to C18 monovalent aromatic hydrocarbon group. The plurality of $R^{47}$ or $R^{48}$ may be either identical or different.

The modifier is preferably a hydrocarbyl oxysilane compound represented with the following general formula (X).

[Formula 9]

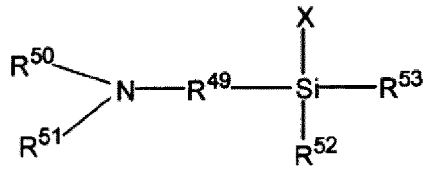

· · · (X)

In the general formula (X), X is a halogen atom; $R^{49}$ is a C1 to C20 divalent aliphatic or alicyclic hydrocarbon group or a C6 to C18 divalent aromatic hydrocarbon group; $R^{50}$ and $R^{51}$ are either independently a hydrolyzable group, a C1 to C20 monovalent aliphatic or alicyclic hydrocarbon group or a C6 to C18 monovalent aromatic hydrocarbon group, or alternatively, $R^{50}$ and $R^{51}$ are bonded to formed a divalent organic group; $R^{52}$ and $R^{53}$ are independently a halogen atom, a hydrocarbyloxy group, a C1 to C20 monovalent aliphatic or alicyclic hydrocarbon group, or a C6 to C18 monovalent aromatic hydrocarbon group. $R^{50}$ and $R^{51}$ are preferably hydrolyzable groups, and as a hydrolyzable group, trimethylsilyl group or tert-butyl dimethylsilyl group is preferable, and trimethylsilyl group is more preferable.

The hydrocarbyl oxysilane compounds represented with the general formulae (III) to (X) in the above are preferably used as modifiers in the case where a conjugated diene-based polymer having the modified functional groups is produced via anionic polymerization.

Moreover, the hydrocarbyl oxysilane compounds represented with the general formulae (III) to (X) are preferably alkoxysilane compounds.

Modifiers preferable in the case of modifying the diene-based polymer via anionic polymerization are specifically exemplified as at least one compound selected from 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone and 1-methyl-2-pyrrolidone.

The modifier is preferably an amide moiety of a lithium amide compound used as a polymerization initiator in anionic polymerization.

This lithium amide compound is preferably exemplified as at least one compound selected from lithium hexamethyleneimide, lithium pyrrolizide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide and lithium methylphenethylamide. For example, the modifier for forming the amide moiety of lithium hexamethyleneimide is hexamethyleneimine, the modifier for forming the amide moiety of lithium pyrrolizide is pyrrolidine, and the modifier for forming the amide moiety of lithium piperidide is piperidine.

Modifiers preferable in the case of modifying the diene-based polymer via coordination polymerization are exemplified as at least one compound selected from 2-cyanopyridine and 3,4-ditrimethylsilyloxy benzaldehyde.

Modifiers preferable in the case of modifying the diene-based polymer via emulsion polymerization are exemplified as at least one compound selected from 3,4-ditrimethylsilyloxy benzaldehyde and 4-hexamethylene iminoalkyl styrene. These modifiers preferably used in emulsion polymerization are preferably copolymerized during emulsion polymerization as a monomer containing nitrogen atom and/or silicon atom.

The diene-based polymer preferably has a glass transition temperature (Tg) of 0°C or less measured with a differential scanning calorimeter (DSC). If the glass transition temperature of the diene-based polymer is more than 0°C, the rubber properties at low temperature are significantly deteriorated.

-Method for producing diene-based polymer-

The method for producing the aforementioned diene-based polymer of this disclosure is not specifically limited as long as capable of having three or more modified functional groups merely within a range of 1/4 of the entire chain length from its terminal, and forming at least one monomer structural unit of a diene-based polymer among the modified functional groups.

As a production method, for example, it is possible to produce the aforementioned modified diene-based polymer by: forming a molecular chain of the diene-based polymer without the modified functional groups (a range of 3/4 of the entire chain length from one terminal of the diene-based polymer, or a range except for a range of respectively 1/4 of the entire chian length from both terminals of the diene-based polymer); and forming a molecular chain formed of the functional groups and the monomer structural unit of the diene-based polymer (a range of 1/4 of the entire chain length

from a terminal of the diene-based polymer, or a range of respectively 1/4 of the entire chain length from both terminals of the diene-based polymer).

Here, there is no problem either to firstly form a molecular chain of the diene-based polymer without the modified functional groups, or to firstly form a molecular chain formed of the functional groups and the monomer structural unit of the diene-based polymer.

Here, formation of the molecular chain formed of the functional groups and the monomer structural unit of the diene-based polymer is exemplified as the following methods (1) to (4).

(1) A method alternatively adding the monomer component of the diene-based polymer, and a modifier copolymerizable with the monomer component and having modified functional groups.
(2) A method simultaneously adding the monomer component of the diene-based polymer, and a modifier copolymerizable with the monomer component and having modified functional groups.
(3) A method alternatively adding the monomer component of the diene-based polymer, and a compound having a site copolymerizable with the monomer component and capable of introduced modified functional groups by chemically reacting with a compound including modified functional groups.
(4) A method simultaneously adding the monomer component of the diene-based polymer, and a compound having a site copolymerizable with the monomer component and capable of introduced modified functional groups by chemically reacting with a compound including modified functional groups.

Among the aforementioned (1) to (4), from the viewpoint of the possibility of securely forming a structure having the monomer structural unit of the diene-based polymer at all points among the modified functional group (i.e., none of the modified functional groups in the diene-based polymer is directly bonded), the aforementioned method (1) or (3) is preferable, and in order to reduce the time for production and improve the productivity, the aforementioned method (2) or (4) is preferable. Here, the aforementioned compound having a site copolymerizable with the monomer component and capable of introduced modified functional groups by chemically reacting with a compound including modified functional groups is exemplified as p-methyl styrene.

In the rubber composition of this disclosure, except the aforementioned diene-based polymer, the rubber component may further contain natural rubber (NR), styrene-butadiene copolymer (SBR), polybutadiene rubber (BR), polyisoprene rubber (IR), butyle rubber (IIR), ethylene-propylene copolymer, etc., and among these, preferably contains at least one among natural rubber, polyisoprene rubber, polybutadiene rubber and styrene-butadiene rubber. These rubber components may be used singly or as a blend of two or more.

(Silica)

The rubber composition of this disclosure contains a silica as a filler added into the rubber component. By containing a silica, it is possible to improve the reinforcing effect of the rubber composition, and to improve the breaking resistance and the wear resistance.

Here, the content of the silica is preferably 60 to 250 parts by mass, more preferably 70 to 150 parts by mass, further more preferably 75 to 120 parts by mass per 100 parts by mass of the rubber component. In the case where the content of the silica is less than 60 parts by mass, the amount of the silica is low, and thus there is a risk that it is impossible to sufficiently obtain an improvement effect of the breaking resistance and the wear resistance. In the case where the content is more than 250 parts by mass, the amount of the silica is excessively high, and thus there is a risk that the elongation and the processability of the rubber composition is deteriorated.

The type of the silica is not specifically limited, and may use either silicas of ordinary grade and special silicas subjected to surface treatment according to its usage. For example, from the viewpoint of improving the processability, the mechanical strength and the wear resistance, wet silica is preferably used.

Further, regarding the silica, it is preferable that the BET specific surface area is 50 to 300 $m^2/g$, and the CTAB specific surface area (specific surface area by cetyltrimethylammonium bromide adsorption) is 50 to 300 $m^2/g$. This is because that higher BET specific surface area and CTAB specific surface area have a reduction effect to the viscosity at an unvulcanized state. Here, the BET specific surface area is measured via a one-point value of BET method, and the CTAB specific surface area is measured according to ASTM D3765.

(Glycerin fatty acid ester composition)

In addition to the aforementioned rubber component and silica, the rubber composition of this disclosure contains 0.5 to 15 parts by mass of a glycerin fatty acid ester composition per 100 parts by mass of the rubber component, which has a carbon atom number of 8 to 28 of the fatty acid, and a glycerin fatty acid monoester and a glycerin fatty acid diester.

As mentioned above, regarding a diene-based polymer having 3 or more modified functional groups capable

of interacting with the silica merely within a range of 1/4 of an entire chain length from a terminal, and having a monomer structural unit of at least one monomer structural unit of a diene-based polymer among the modified functional groups, although capable of achieving a high reactivity with the silica and an excellent low loss property, if directly applied to a rubber composition, the rubber pastiness is deteriorated and it is impossible to obtain sufficient processability. Therefore, in this disclosure, by compounding the glycerin fatty acid ester composition with the rubber composition at a specific amount, it is possible to increase the dispersibility of the silica and greatly improve the low loss property, the breaking resistance and the wear resistance, without causing deterioration of rubber pastiness and reduction of processability.

Here, in the glycerin fatty acid ester in the glycerin fatty acid ester composition, the fatty acid (C8 to C28) is bonded with at least one among the 3 OH groups of the glycerin via ester bond, and depending on the number of fatty acids, the glycerin fatty acid ester is divided into glycerin fatty acid monoester, glycerin fatty acid diester and glycerin fatty acid trimester.

The glycerin fatty acid ester composition used in this disclosure contains glycerin fatty acid monoester and glycerin fatty acid diester, but may also contain glycerin fatty acid triester and glycerin as well.

From the viewpoint of suppresion of the viscosity of unvulcanized rubber due to vulcanization accelerator, improvement of dispersibility of inorganic filler, improvement of processability and improvement of low loss property due to viscosity reduction of unvulcanized rubber, etc., the fatty acid for forming the glycerin fatty acid ester is a fatty acid having 8 28 carbon atoms, preferably 8 to 22 carbon atoms, more preferably 10 to 18 carbon atoms, further more preferably 12 to 18 carbon atoms. Moreover, the fatty acid may be saturated, unsaturated, straight chain, or branched, but is preferably a straight-chain saturated fatty acid. The fatty acid is specifically exemplified as capric acid, lauric acid, myristic acid, palmitic acid, stearic acid, isostearic acid, oleic acid, linoleic acid, behenic acid, montanic acid, etc. Among these, lauric acid, palmitic acid and stearic acid are preferable, and palmitic acid and stearic acid are more preferable.

Here, in a fatty acid with less than 8 carbon atoms, the affinity with the polymer is low, which is likely to cause blooming. On the other hand, in a fatty acid with more than 28 carbon atoms, the improment effect to processability is no different from 28 carbon atoms or less, but has a higher cost and thus is unpreferable.

The glycerin fatty acid ester composition has a content of the glycerin fatty acid monoester of preferably 65 mass% or more, more preferably 65 to 100 mass%. This is because that such glycerin fatty acid ester composition is capable of sufficiently improving the processability, the low loss property and the breaking resistance of the rubber composition.

Further, the amount of the glycerin fatty acid monoester is preferably within a range of 90 to 99 mass%, more preferably 95 to 99 mass%. This is because that regarding the low loss property, the loss is improved as the glycerin fatty acid monoester amount in the glycerin fatty acid ester is increased.

In this disclosure, the glycerin fatty acid ester composition may be produced via esterification from a glycerin and a fatty acid decomposed from fats and oils, and transesterification by using fats and oils, etc. and a glycerin as materials. The method for producing one with a controlled monoester amount in the glycerin fatty acid ester composition is exemplified as the following methods 1) to 3).

1) A method for controlling the equilibrium composition of esterification, by varying the feed ratio of the fatty acid component and the glycerin component in the aforementioned esterification or transesterification. The glycerin may be further removed via distillation. Here, considering the reaction properties, the upper limit of the obtained glycerin fatty acid monoester amount is regarded as around 65 mass%.

2) A method for taking out the glycerin fatty acid monoester at a high purity (ordinarily 95 mass% or more), by further performing fractional distillation to the reaction product obtained via esterification or transesterification via molecular distillation, etc.

3) A method for obtaining the glycerin fatty acid monoester within a comparatively high purity range (approximately 65 to 95 mass%), by blending the high-purity glycerin fatty acid monoester obtained via the aforementioned method 2) with the medium-purity glycerin fatty acid monoester obtained via the method 1) at any ratio.

By using ones derived from natural products as the aforementioned materials of fats and oils and fatty acid, it is possible to use a glycerin fatty acid ester composition with a reduced load to the environment, etc.

Further, the glycerin fatty acid ester composition used in this disclosure may use commercially available ones with controlled monoester amount, where the commercially available ones are exemplified as stearic acid monoglyceride (Rheodol MS-60, Excel S-95 made by Kao Corporation), etc.

In this disclosure, the monoglyceride content (glycerin fatty acid monoester content) in the glycerin fatty acid ester composition refers to a result determined according to the following formula (I) via GPC analysis (gel permeation chromatography), and means an area ratio in GPC analysis of monoglyceride to a total of glycerin, monoglyceride, diglyceride (glycerin fatty acid diester) and triglyceride (glycerin fatty acid triester).

[Formula 1]

$$\text{Monoglyceride content (area\%)} = \frac{MG}{[G+MG+DG+TG]} \times 100 \qquad (I)$$

[In the aforementioned formula (I), G is the glycerin area of GPC, MG is the monoglyceride area of GPC, DG is the diglyceride area of GPC, and TG is the triglyceride area of GPC.
Further, the measurement conditions of GPC are as follows.

[Measurement conditions of GPC]

The measurement of GPC used the following measurement apparatus to render THF (tetrahydrofuran) as an elute at a flow rate of 0.6 ml/min, and stabilize the column with a thermostatic oven at 40°C. Then, 10 μL of a sample solution dissolved in THF at 1 mass% was injected, and measurement was performed.

Standard substance:Monodispersed polystyrene
Detector: RI-8022 (made by Tosoh Corporation)
Measurement apparatus: HPLC-8220 GPC (made by Tosoh Corporation)
Analytical column: Series connection of two TSK-GEL SUPER H1000 and two TSK-GEL SUPER H2000 (made by Tosoh Corporation)

Similarly, the diglyceride or triglyceride content in the glycerin fatty acid ester composition refers to an area ratio in GPC analysis of diglyceride or triglyceride to a total of glycerin, monoglyceride, diglyceride and triglyceride.
For example, usable ones of the glycerin fatty acid ester composition with a controlled amount of monoester are exemplified as composition containing glyceryl caprylate of C8 fatty acid, composition containing glyceryl decanoate of C10 fatty acid, composition containing glyceryl laurate of C12 fatty acid, composition containing glyceryl myristate of C14 fatty acid, composition containing glyceryl palmitate of C16 fatty acid, composition containing glyceryl stearate of C18 fatty acid, composition containing glyceryl behenate of C22 fatty acid, composition containing glyceryl montanate of C28 fatty acid, etc., and among these, composition containing glyceryl laurate, composition containing glyceryl palmitate and composition containing glyceryl stearate are preferable. These glycerin fatty acid ester containing compositions with controlled monoester amount are selected and compounded either singly or in a combination of two or more.
From the viewpoint of reducing the viscosity of unvulcanized rubber, the content of the glycerin fatty acid ester composition in the rubber composition of this disclosure per 100 parts by mass of the rubber component is 0.5 parts by mass or more, preferably 1 part by mass or more, more preferably 2 parts by mass or more, further more preferably 3 parts by mass or more; and from the viewpoint of suppressing excessive deterioration of rubber physical properties (reduction of storage modulus, etc.) after vulcanization, is 15 parts by mass or less, preferably 10 parts by mass or less, more preferably 8 parts by mass or less. Moreover, from the viewpoint of viscosity and rubber physical properties of unvulcanized rubber, a range of 1 to 2 parts by mass is the most preferable.

(Other components)

Other than the aforementioned rubber component, silica and glycerin fatty acid ester composition, the rubber composition of this disclosure may appropriately select and compound compounding agents ordinarily used in the rubber industry as long as not imparing the purpose of this disclosure, e.g., carbon black, activator, silane coupling agent, vulcanizing agent, vulcanization accelerator aid, age resistor, softener, etc. These compounding agents are preferably commercially available ones. The rubber composition of this disclosure may be produced by compounding to the rubber component, the silica, the glycerin fatty acid ester composition, and appropriately selected various compounding agents if necessary, via kneading, warming, extrusion, etc.
The kneading process may include: preparing a first mixture containing the rubber component, the silica and the glycerin fatty acid ester composition; and preparing a preliminary composition by kneading the first mixture.
The kneading apparatus is not specifically limited, and may use, e.g., Banbury mixer, roll, intensive mixer, etc.

-Carbon black-

Here, the carbon black is not specifically limited, but is preferably one of FEF, SRF, HAF, ISAF, SAF grade, more preferably one of HAF, ISAF, SAF grade.
Moreover, the content of the carbon black is not specifically limited, and may be appropriately adjusted depending on the purpose.

-Activator-

The rubber composition of this disclosure preferably further contains an activator containing at least one selected from vulcanization accelerators, specifically, a vulcanization accelerator containing guanidines, sulfenamides, thiazoles, thiurams, thioureas, dithiocarbamates or xanthates; and cysteines, thiourea, ammonium thiocyanate, zinc dialkyl dithiophosphate. This is because that it is possible to further improve the processability of the rubber composition. The vulcanization accelerator has an activation effect to the polysulfide binding site reacting with the rubber component (A).

Usable ones of the guanidines are exemplified as 1,3-diphenylguanidine (DPG), 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine, etc., among which 1,3-diphenylguanidine, 1,3-di-o-tolylguanidine and 1-o-tolylbiguanide are preferable due to their high reactivity, and 1,3-diphenylguanidine (DPG) is more preferable due to its higher reactivity.

Usable ones of the sulfenamides are exemplified as N-cyclohexyl-2-benzothiazolylsulfenamide, N,N-dicyclohexyl-2-benzothiazolylsulfenamide, N-tert-butyl-2-benzothiazolylsulfenamide, N-oxydiethylene-2-benzothiazolylsulfenamide, N-methyl-2-benzothiazolylsulfenamide, N-ethyl-2-benzothiazolylsulfenamide, N-propyl-2-benzothiazolylsulfenamide, N-butyl-2-benzothiazolylsulfenamide, N-pentyl-2-benzothiazolylsulfenamide, N-hexyl-2-benzothiazolylsulfenamide, N-octyl-2-benzothiazolylsulfenamide, N-2-ethylhexyl-2-benzothiazolylsulfenamide, N-decyl-2-benzothiazolylsulfenamide, N-dodecyl-2-benzothiazolylsulfenamide, N-stearyl-2-benzothiazolylsulfenamide, N,N-dimethyl-2-benzothiazolylsulfenamide, N,N-diethyl-2-benzothiazolylsulfenamide, N,N-dipropyl-2-benzothiazolylsulfenamide, N,N-dibutyl-2-benzothiazolylsulfenamide, N,N-dipentyl-2-benzothiazolylsulfenamide, N,N-dihexyl-2-benzothiazolylsulfenamide, N,N-dioctyl-2-benzothiazolylsulfenamide, N,N-di-2-ethylhexylbenzothiazolylsulfenamide, N,N-didodecyl-2-benzothiazolylsulfenamide, N,N-distearyl-2-benzothiazolylsulfenamide, etc. Among these, N-cyclohexyl-2-benzothiazolylsulfenamide and N-tert-butyl-2-benzothiazolylsulfenamide are preferable due to their high reactivity.

Usable ones of the thiazoles are exemplified as 2-mercaptobenzothiazole, di-2-benzothiazolyldisulfide, zinc 2-mercaptobenzothiazolate, cyclohexylamine salt of 2-mercaptobenzothiazole, 2-(N,N-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazolate, 2-mercapto-6-nitrobenzothiazole, 2-mercapto-naphtho[1,2-d]thiazol, 2-mercapto-5-methoxybenzothiazole, 6-amino-2-mercaptobenzothiazole, etc. Among these, 2-mercaptobenzothiazole (M) and di-2-benzothiazolyldisulfide (DM) are preferable due to their high reactivity.

Usable ones of the thiurams are exemplified as tetramethylthiuram disulfide, tetraethylthiuram disulfide, tetrapropylthiuram disulfide, tetraisopropylthiuram disulfide, tetrabutylthiuram disulfide, tetrapentylthiuram disulfide, tetrahexylthiuram disulfide, tetraheptylthiuram disulfide, tetraoctylthiuram disulfide, tetranonylthiuram disulfide, tetradecylthiuram disulfide, tetradodecylthiuram disulfide, tetrastearylthiuram disulfide, tetrabenzylthiuram disulfide, tetrakis(2-ethylhexyl)thiuram disulfide, tetramethylthiuram monosulfide, tetraethylthiuram monosulfide, tetrapropylthiuram monosulfide, tetraisopropylthiuram monosulfide, tetrabutylthiuram monosulfide, tetrapentylthiuram monosulfide, tetrahexylthiuram monosulfide, tetraheptylthiuram monosulfide, tetraoctylthiuram monosulfide, tetranonylthiuram monosulfide, tetradecylthiuram monosulfide, tetradodecylthiuram monosulfide, tetrastearylthiuram monosulfide, tetrabenzylthiuram monosulfide, dipentamethylenethiuram tetrasulfide, etc. Among these, tetrakis(2-ethylhexyl)thiuram disulfide and tetrabenzylthiuram disulfide are preferably due to their high reactivity.

Usable ones of the thioureas are exemplified as N,N'-diphenylthiourea, trimethylthiourea, N,N'-diethylthiourea, N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, o-tolylthiourea, etc. Among these, N,N'-diethylthiourea, trimethylthiourea, N,N'-diphenylthiourea and N,N'-dimethylthiourea are preferably due to their high reactivity.

Usable ones of the dithiocarbamates are exemplified as zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc N-pentamethylenedithiocarbamate, zinc N-ethyl-N-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper N-pentamethylenedithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium N-pentamethylenedithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate, ferric di(2-ethylhexyl)dithiocarbamate, ferric didecyldithiocarbamate, ferric didodecyldithiocarbamate, ferric N-pentamethylenedithiocarbamate, ferric dibenzyldithiocarbamate, etc. Among these, zinc dibenzyldithiocarbamate, zinc N-ethyl-N-phenyldithiocarbamate, zinc dimethyldithiocarbamate and copper dimethyldithiocarbamate are preferable due to their high reactivity.

Usable ones of the xanthates are exemplified as zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, sodium dodecylxanthate, etc. Among these, zinc isopropylxanthate is preferable due to its high reactivity.

Similarly as the aforementioned vulcanization accelerator, usable ones of the cysteines, the thiourea, the ammonium thiocyanate and the zinc dialkyl dithiophosphate are those having an activation effect to the polysulfide binding site reacting with the rubber component.

Usable ones of the cysteines are exemplified as (L-)cysteine, N-acetyl-L-cysteine, (L-)cysteine hydrochloride, (L-)cysteine ethyl ester hydrochloride, (L-)cysteine methyl ester hydrochloride, etc.

Usable ones of the zinc dialkyl dithiophosphate (ZnDTP) are exemplified as zinc dialkyl dithiophosphates with C4 to C12 alkyl group or aryl group.

Specifically preferable activators such as vulcanization accelerator and the like are guanidines, cysteines, thiourea, ammonium thiocyanate and zinc dialkyl dithiophosphate with a high reactivity, more preferably 1,3-diphenylguanidine (DPG).

The total content of the activators is not specifically limited, but is preferably 0.3 to 6 parts by mass, more preferably 0.3 to 2.5 parts by mass, further more preferably 0.5 to 1.5 parts by mass per 100 parts by mass of the rubber component If the total content of the activators is less than 0.3 parts by mass, there is a risk of reduction of low loss effect, and on the other hand, if the total content of the activators is more than 6 parts by mass, there is a risk that the viscosity and the shrinkage is greatly affected and the uniformity is deteriorated.

-Silane coupling agent-

From the viewpoint of improving the processability and the wear resistance, the rubber composition of this disclosure preferably further contains a silane coupling agent.

The silane coupling agent is not specifically limited, and may use various general-purpose silane coupling agents. From the viewpoint of improving the wear resistance as mentioned above, one or more of the silane coupling agents as follows is preferable.

Exemplified is at least one of bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropylmethoxysilane, 3-chloropropyltriethoxysilane, 2-chloroethyltrimethoxysilane, 2-chloroethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, 3-nitropropyldimethoxymethylsilane, 3-chloropropyldimethoxymethylsilane, dimethoxymethylsilylpropyl-N,N-dimethylthiocarbamoyl tetrasulfide, dimethoxymethylsilylpropylbenzothiazole tetrasulfide, etc.

The compounding amount of the silane coupling agent varies depending on the compounding amount of the silica, but from the viewpoint of the reinforcement performance, is preferably 1 part by mass or more, more preferably 4 parts by mass or more, per 100 parts by mass of the silica; on the other hand, from the viewpoint of maintaining the heating performance, is preferably 20 parts by mass or less, more preferably 12 parts by mass or less, per 100 parts by mass of the silica. The compounding amount of the silane coupling agent is preferably 1 to 20 parts by mass, more preferably 4 to 12 parts by mass per 100 parts by mass of the silica.

-Vulcanizing agent-

The vulcanizing agent is exemplified as sulfurs such as sulfur, insoluble sulfur and the like, and its compounding

amount is preferably 0.1 to 10 parts by mass, more preferably 1.0 to 5 parts by mass in terms of sulfur per 100 parts by mass of the rubber component.

<Tire>

The tire of this disclosure uses the rubber composition. A tire using the rubber composition as tire components, in particular, as the tread member, is excellent in processability, low loss property and wear resistance. Here, the tire of this disclosure is not specifically limited as long as using the aforementioned rubber composition on any tire member, and may be produced with an ordinary method. Moreover, the gas filled in the tire may be ordinary air, air with adjusted oxygen partial pressure, or inactive gases such as nitrogen, argon, helium and the like.

EXAMPLES

This disclosure will be explained in further detail below according to examples, while this disclosure is not limited to the examples below.

Modified polymers A to L were produced according to the following process. Here, presence/absence of direct bonding between modified functional groups, positions of modified functional groups, types of modified functional groups, numbers of modified functional groups and peak molecular weights of modified polymers of each modified polymer are as shown in Table 1.

(Production of modified polymer A)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 15g; 0.29 millimol of 2,2-ditetrahydrofurylpropane was added, and 0.57 millimol of n-butyllithium was further added as a polymerization initiator; and then, polymerization was performed at 50°C for 1.5 hours. The polymerization conversion rate in this case was approximately 100%.

Next, 0.57 millimol of 3,4-bis(trimethylsilyloxy)-1-vinylbenzene was added into the polymerization reaction system as a modifier, and reacted for 30 minutes. Afterward, 0.5 milliliter of an isopropanol 5 mass% solution of 2,6-di-t-butyl-p-cresol (BHT) was added to terminate the reaction, and the modified polymer A was obtained by drying with an ordinary method.

(Production of modified polymer B)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 15g; 2.85 millimol of 3,4-bis(trimethylsilyloxy)-1-vinylbenzene and 0.29 millimol of 2,2-ditetrahydrofurylpropane were added in order as a modifier, and 0.57 millimol of n-butyllithium was further added as a polymerization initiator; and then, polymerization was performed at 50°C for 1.5 hours. The polymerization conversion rate in this case was approximately 100%. Afterward, 0.5 milliliter of an isopropanol 5 mass% solution of 2,6-di-t-butyl-p-cresol (BHT) was added to terminate the reaction, and the modified polymer B was obtained by drying with an ordinary method.

(Production of modified polymer C)

A cyclohexane solution of 1,3-butadiene and a cyclohexane solution of styrene were added into a 800 milliliter pressure-resistant glass container subjected to drying and nitrogen substitution, such that 1,3-butadiene was 48g and styrene was 12g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a mixed solution of a cyclohexane solution of 1,3-butadiene containing 12g of 1,3-butadiene, a cyclohexane solution of styrene containing 3g of styrene, and 2.85 millimol of 3,4-bis(trimethylsilyloxy)-1-vinylbenzene as a modifier was added into the polymerization reaction system at one time, and the polymerization reaction was further performed for 1 hour. The polymerization conversion rate in this case was approximately 100%. Afterward, 0.5 milliliter of an isopropanol 5 mass% solution of 2,6-di-t-butyl-p-cresol (BHT) was added to terminate the reaction, and the modified polymer C was obtained by drying with an ordinary method.

(Production of modified polymer D)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of tetraethyl orthosilicate was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of tetraethyl orthosilicate was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer D was obtained by drying with an ordinary method.

(Production of modified polymer E)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of glycidoxypropyltrimethoxysilane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes.

2.28 millimol of glycidoxypropyltrimethoxysilane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer E was obtained by drying with an ordinary method.

(Production of modified polymer F)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of N-(1,3-dimethylbutylidene)-3-(triethoxysilyl)-1-propaneamine was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N-(1,3-dimethylbutylidene)-3-(triethoxysilyl)-1-propaneamine was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer F was obtained by drying with an ordinary method.

(Production of modified polymer G-1)

A cyclohexane solution of 1,3-butadiene and a cyclohexane solution of styrene were added into a 800 milliliter

pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.27g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-1 was obtained by drying with an ordinary method.

(Production of modified polymer G-2)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.60 millimol of 2,2-ditetrahydrofurylpropane was added, and 1.20 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.52g of p-methylstyrene were added into the polymerization reaction system at one time, and the polymerization reaction was further performed for 1 hour. At the timing when the polymerization conversion rate approached 99%, 1.20 millimol of N,N-bis(trimethylsilyl)-(3-amino-1-propyl)(methyl)(diethoxy)silane was added as a terminal modifier and reacted for 15 minutes.

Next, 4.80 millimol of sec-butyllithium and 2.40 millimol of 2,2-ditetrahydrofurylpropane were added into the aforementioned polymer solution, and reacted at 80°C for 10 minutes. 4.80 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-2 was obtained by drying with an ordinary method.

(Production of modified polymer G-3)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.57 millimol of 2,2-ditetrahydrofurylpropane was added, and 1.14 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.48g of p-methylstyrene were added into the polymerization reaction system at one time, and the polymerization reaction was further performed for 1 hour. At the timing when the polymerization conversion rate approached 99%, 1.14 millimol of N,N-bis(trimethylsilyl)-(3-amino-1-propyl)(methyl)(diethoxy)silane was added as a terminal modifier and reacted for 15 minutes.

Next, 4.56 millimol of sec-butyllithium and 2.28 millimol of 2,2-ditetrahydrofurylpropane were added into the aforementioned polymer solution, and reacted at 80°C for 10 minutes. 4.56 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-3 was obtained by drying with an ordinary method.

(Production of modified polymer G-4)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.115 millimol of 2,2-ditetrahydrofurylpropane was added, and 0.23 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.48g of styrene and 0.10g of p-methylstyrene were added into the polymerization reaction system at one time, and the polymerization reaction was further performed for 1 hour. At the timing when the polymerization conversion rate approached 99%, 0.23 millimol of N,N-bis(trimethylsilyl)-(3-amino-1-propyl)(methyl)(diethoxy)silane was added as a terminal modifier and reacted for 15 minutes.

Next, 0.92 millimol of sec-butyllithium and 2.85 millimol of 2,2-ditetrahydrofurylpropane were added into the aforementioned polymer solution, and reacted at 80°C for 10 minutes. 0.92 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer G-4 was obtained by drying with an ordinary method.

(Production of modified polymer H)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.61g of styrene and 0.14g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 1.14 millimol of sec-butyllithium and 0.57 millimol of 2,2-ditetrahydrofurylpropane were added into the aforementioned polymer solution, and reacted at 80°C for 10 minutes. 1.14 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer H was obtained by drying with an ordinary method.

(Production of modified polymer I)

A cyclohexane solution of 1,3-butadiene and a cyclohexane solution of styrene were added into a 800 milliliter pressure-resistant glass container subjected to drying and nitrogen substitution, such that 1,3-butadiene was 45g and styrene was 11.25g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 15g of 1,3-butadiene and a cyclohexane solution of styrene containing 3.68g of styrene and 0.07g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl)(diethoxy)silane was added as a terminal modifier and reacted for 15 minutes.

Next, 0.57 millimol of sec-butyllithium and 0.28 millimol of 2,2-ditetrahydrofurylpropane were added into the aforementioned polymer solution, and reacted at 80°C for 10 minutes. 0.57 millimol of N,N-bis(trimethylsilyl)-(3-amino-1-propyl) (methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer I was obtained by drying with an ordinary method.

(Production of modified polymer J)

A cyclohexane solution of 1,3-butadiene and a cyclohexane solution of styrene were added into a 800 milliliter pressure-resistant glass container subjected to drying and nitrogen substitution, such that 1,3-butadiene was 30g and styrene was 7.5g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution of 1,3-butadiene containing 30g of 1,3-butadiene and a cyclohexane solution of styrene containing 7.23g of styrene and 0.27g of p-methylstyrene were added into the polymerization reaction system at one time, and the polymerization reaction was further performed for 1 hour. At the timing when the polymerization conversion rate approached 99%, 0.57 millimol of N,N-bis(trimethylsilyl)-(3-amino-1-propyl)(methyl) (diethoxy)silane

was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N,N-bis(trimethylsilyl)-(3-amino-1-propyl) (methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol (BHT) was added to terminate the reaction, and the modified polymer J was obtained by drying with an ordinary method.

(Production of modified polymer K)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 14.73g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, a cyclohexane solution styrene containing 0.27g of p-methylstyrene was added, and the polymerization reaction was performed for 15 minutes; then, 0.57 millimol of N,N-bis(trimethylsilyl)-(3-amino-1-propyl)(methyl)(diethoxy)silane was added as a terminal modifier and reacted for 15 minutes.

Next, 2.28 millimol of sec-butyllithium and 1.14 millimol of 2,2-ditetrahydrofurylpropane were added into the aforementioned polymer solution, and reacted at 80°C for 10 minutes. 2.28 millimol of N,N-bis(trimethylsilyl)-(3-amino-1-propyl)(methyl)(diethoxy)silane was added as a main chain modifier into the polymer solution obtained after the reaction, and reacted for 15 minutes. Afterward, 0.5 milliliter of an isopropanol 5 mass% solution of 2,6-di-t-butyl-p-cresol(BHT) was added to terminate the reaction, and the modified polymer K was obtained by drying with an ordinary method.

(Production of modified polymer L)

A cyclohexane solution of 1,3-butadiene and a cyclohexane solution of styrene were added into a 800 milliliter pressure-resistant glass container subjected to drying and nitrogen substitution, such that 1,3-butadiene was 60g and styrene was 15g; 0.29 millimol of 2,2-ditetrahydrofurylpropane was added, and 0.57 millimol of n-butyllithium was added; and then, polymerization was performed at 50°C for 1.5 hours. The polymerization conversion rate in this case was approximately 100%.

Next, 2.85 millimol of 3,4-bis(trimethylsilyloxy)-1-vinylbenzene (oxygen based) was added as a modifier, and the polymerization reaction was performed for 15 minutes. Afterward, 0.5 milliliter of an isopropanol 5 mass% solution of 2,6-di-t-butyl-p-cresol(BHT) was added to terminate the reaction, and the modified polymer L was obtained by drying with an ordinary method.

[Table 1]

| | Bonding of functional groups | Positions of functional groups | Modifier | Number of functional groups | Peak molecular weight (Mp/ 10,000) |
|---|---|---|---|---|---|
| Modified polymer A | Presence | Terminal | 3,4-bis(trimethylsilyloxy)-1-vinylbenzene | 1 | 20 |
| Modified polymer B | Absence | In chain | 3,4-bis(trimethylsilyloxy)-1-vinylbenzene | 5 | 20 |
| Modified polymer C | Absence | Region of 1/4 from a terminal | 3,4-bis(trimethylsilyloxy)-1-vinylbenzene | 5 | 20 |
| Modified polymer D | Absence | Region of 1/4 from a terminal | Tetraethyl orthosilicate | 5 | 20 |
| Modified polymer E | Absence | Region of 1/4 from a terminal | Glycidoxypropyltrimethoxysilane | 5 | 20 |

(continued)

| | Bonding of functional groups | Positions of functional groups | Modifier | Number of functional groups | Peak molecular weight (Mp/ 10,000) |
|---|---|---|---|---|---|
| Modified polymer F | Absence | Region of 1/4 from a terminal | N-(1,3-dimethylbutylidene)-3-(triethoxysil yl)-1-propaneamine | 5 | 20 |
| Modified polymer G-1 | Absence | Region of 1/4 from a terminal | N,N-bis(trimethylsilyl)-(3-amino-1-propyl)(methyl)(diethoxy)silane | 5 | 20 |
| Modified polymer G-2 | Absence | Region of 1/4 from a terminal | N,N-bis(trimethylsilyl)-(3-amino-1-propyl)(methyl)(diethoxy)silane | 5 | 8 |
| Modified polymer G-3 | Absence | Region of 1/4 from a terminal | N,N-bis(trimethylsilyl)-(3-amino-1-propyl)(methyl)(diethoxy)silane | 5 | 10 |
| Modified polymer G-4 | Absence | Region of 1/4 from a terminal | N,N-bis(trimethylsilyl)-(3-amino-1-propyl)(methyl)(diethoxy)silane | 5 | 35 |
| Modified polymer H | Absence | Region of 1/4 from a terminal | N,N-bis(trimethylsilyl)-(3-amino-1-propyl)(methyl)(diethoxy)silane | 3 | 20 |
| Modified polymer I | Absence | Region of 1/4 from a terminal | N,N-bis(trimethylsilyl)-(3-amino-1-propyl)(methyl)(diethoxy)silane | 2 | 20 |
| Modified polymer J | Absence | Region of 1/2 from a terminal | N,N-bis(trimethylsilyl)-(3-amino-1-propyl)(methyl)(diethoxy)silane | 5 | 20 |
| Modified polymer K | Between all functional groups | Region of 1/4 from a terminal | N,N-bis(trimethylsilyl)-(3-amino-1-propyl)(methyl)(diethoxy)silane | 5 | 20 |
| Modified polymer L | Between all functional groups | Region of 1/4 from a terminal | 3,4-bis(trimethylsilyloxy)-1-vinvlbenzene | 5 | 20 |

Next, glycerin fatty acid esters A and B (glycerin fatty acid ester compositions of C16 fatty acid) were prepared according to the following process.

(Glycerin fatty acid ester A)

450g of glycerin and 352g of palmitic acid (Lunac P-95, made by Kao Corporation) [glycerin/fatty acid (molar ratio) = 2.0] were added into a 1L four neck flask attached with mixer, dehydration pipe-cooling pipe, thermometer and nitrogen introduction pipe; 10 ppm of sodium hydroxide dissolved in a small amount of water was added as sodium; nitrogen was separated at 100 mL/ in the over-liquid space portion and simultaneously stirred at 400 r/min; and the temperature was raised to 240°C in about 1.5 hours. After approaching 240°C, the acidic component was refluxed to the flask and dehydrated, and was reacted at the temperature for 4 hours. The monoglyceride content in the product after reaction was about 67 area%.

Next, the reaction mixture was cooled to 170°C; and glycerin was directly distilled under a reduced pressure of 2.7 kPa or less, supplied with water vapor at 150°C and 2kPa for 2 hours, and then subjected to adsorptive filtration

at an increased pressure by using ZetaPlus 30S (made by Cuno, Inc.), to obtain a monoglyceride-composition (glycerin fatty acid ester A). By measuring the obtained composition with GPC, the composition of each component was determined.

Here, in the obtained glycerin fatty acid ester A, the content of the glycerin fatty acid monoester was 64 mass%, the content of the glycerin fatty acid diester was 34 mass%, the content of the glycerin fatty acid triester was 1 mass%, and the content of the glycerin was 1 mass%.

(Glycerin fatty acid ester B)

The glycerin fatty acid ester B was prepared according to the method as disclosed in Production Example 1 of WO2014098155A1, by synthesizing a fatty acid by transforming octanoic acid into a hydrogated fatty acid derived from palm with the same molar amount, and further performing molecular distillation.

Here, in the glycerin fatty acid ester B, the content of the glycerin fatty acid monoester was 97 mass%, the content of the glycerin was 0.5 mass%, and the rest 2.5 mass% was a mixture of water, glycerin fatty acid diester, glycerin fatty acid trimester, etc.

<Examples 1 to 13 and Comparative Examples 1 to 11>

By using the aforementioned modified polymers A to L and adjusting the rubber composition according to the formulation as shown in Table 2, each sample of the examples and the comparative examples was obtained.

With respect to each sample of the examples and the comparative examples, evaluation was performed regarding (1) pastiness, (2) processability, (3) wear resistance and (4) low loss property.

(1) Pastiness

Each sample was obtained via extrusion molding, and the sheet properties of the obtained rubber sheets were evaluated by observing according to the following standard. Better sheet properties show excellent operability and processability.

Excellent: very excellent sheet shape
Good: excellent sheet shape
Poor: poor sheet shape with recesses and projections
Fail: uncapable of forming sheet (physical properties unevaluable)

(2) processability

With respect to each sample, according to JIS-K6300-1:2001, the Mooney viscosity [ML1+4(130°C)] of unvulcanized rubber composition was measured with a Mooney viscosity meter (RPA, made by Monsanto), by using an L-type rotor at 130°C.

The value of Mooney viscosity of the obtained unvulcanized rubber composition was represented with an index, with the viscosity value of Comparative Example 1 as 100. A smaller value shows an excellent processability (operability).

(3) Wear resistance

With respect to each sample, by using Lambourn abrasion test according to JIS K 6246-2:2005, the abrasion amount at a slip rate of 60% at room temperature was measured.

The reciprocal of the obtained value of abrasion amount was represented as an index, with the value of Comparative Example 1 as 100. The result was as shown in Table 2. A larger index value shows a less abrasion amount and an excellent wear resistance.

(5) Low loss property (tan $\delta$)

With respect to each sample, the loss tangent (tan $\delta$) was measured by using a viscoelasticity measurement apparatus (made by Rheometrics Inc.) at a temperature of 50°C, a strain of 5% and a frequency of 15 Hz. The obtained value of tan $\delta$ was represented as an index, with the value of Comparative Example 1 as 100. The result was as shown in Table 2. Here, a smaller index value of the low loss property shows an excellent low loss property.

[Table 2]

| | Comparative examples | | | | | | Examples | | | | | | | | | | Comparative examples | | | Reference Examples | Comparative examples | Examples | Comparative examples | Examples |
|---|---|---|---|---|---|---|---|---|---|---|---|---|---|---|---|---|---|---|---|---|---|---|---|---|
| | 1 | 2 | 3 | 4 | 5 | 6 | 1 | 2 | 3 | 4 | 5 | 6 | 7 | 8 | 9 | 10 | 7 | 8 | 9 | 11 | 10 | 12 | 11 | 13 |
| E-SBR $^{*4}$ | 138 | 68.8 | 138 | 68.8 | 68.8 | 68.8 | 68.8 | 68.8 | 68.8 | 68.8 | 68.8 | 68.8 | 68.8 | 68.8 | 68.8 | 68.8 | 68.8 | 68.8 | 68.8 | 68.75 | 68.75 | 68.75 | 41.25 | 41.25 |
| Modified polymer A | - | - | - | - | 50 | - | - | - | - | - | - | - | - | - | - | - | - | - | - | - | - | - | - | - |
| Modified polymer B | - | - | - | - | - | 50 | - | - | - | - | - | - | - | - | - | - | - | - | - | - | 50 | - | 70 | - |
| Modified polymer C | - | - | - | 50 | - | - | 50 | 50 | - | - | - | - | - | - | - | - | - | - | - | - | - | - | - | - |
| Modified polymer D | - | - | - | - | - | - | - | - | 50 | - | - | - | - | - | - | - | - | - | - | - | - | - | - | - |
| Modified polymer E | - | - | - | - | - | - | - | - | - | 50 | - | - | - | - | - | - | - | - | - | - | - | - | - | - |
| Modified polymer F | - | - | - | - | - | - | - | - | - | - | 50 | - | - | - | - | - | - | - | - | - | - | - | - | - |
| Modified polymer G-1 | - | - | - | - | - | - | - | - | - | - | - | 50 | - | - | - | - | - | - | - | - | | 50 | | 70 |
| Modified polymer G-2 | - | - | - | - | - | - | - | - | - | - | - | - | 50 | - | - | - | - | - | - | - | - | - | - | - |
| Modified polymer G-3 | - | - | - | - | - | - | - | - | - | - | - | - | - | 50 | - | - | - | - | - | - | - | - | - | - |
| Modified polymer G-4 | - | - | - | - | - | - | - | - | - | - | - | - | - | - | 50 | - | - | - | - | - | - | - | - | - |
| Modified polymer H | - | - | - | - | - | - | - | - | - | - | - | - | - | - | - | 50 | - | - | - | - | - | - | - | - |
| Modified polymer I | - | - | - | - | - | - | - | - | - | - | - | - | - | - | - | - | 50 | - | - | - | - | - | - | - |
| Modified polymer J | - | - | - | - | - | - | - | - | - | - | - | - | - | - | - | - | - | 50 | - | - | - | - | - | - |
| Modified polymer K | - | - | - | - | - | - | - | - | - | - | - | - | - | - | - | - | - | - | 50 | - | - | - | - | - |
| Modified polymer L | - | - | - | - | - | - | - | - | - | - | - | - | - | - | - | - | - | - | - | 50 | - | - | - | - |
| Silica$^{*1}$ | 75 | 75 | 75 | 75 | 75 | 75 | 75 | 75 | 75 | 75 | 75 | 75 | 75 | 75 | 75 | 75 | 75 | 75 | 75 | 75 | 60 | 60 | 100 | 100 |
| Silane coupling agent$^{*2}$ | 8 | 8 | 8 | 8 | 8 | 8 | 8 | 8 | 8 | 8 | 8 | 8 | 8 | 8 | 8 | 8 | 8 | 8 | 8 | 8 | 8 | 8 | 8 | 8 |
| Carbon black (ISAF-HS)$^{*3}$ | | | | | | | | | | | | | | | | | | | | | 15 | 15 | | |
| Glycerin fatty acid ester composition A | | 2 | | | 2 | | 2 | | 2 | 2 | 2 | 2 | 2 | 2 | 2 | 2 | 2 | 2 | 2 | 2 | 2 | 2 | 2 | 2 |
| Glycerin fatty acid ester composition B | | | 2 | | | 2 | | 2 | | | | | | | | | | | | | | | | |
| Vulcanization accelerator A$^{*9}$ | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Vulcanization accelerator B$^{*10}$ | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator C$^{*11}$ | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 | 0.6 |
| Oil$^{*12}$ | | | | | | | | | | | | | | | | | | | | | | | 7.5 | 7.5 |
| Stearic acid | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| Age resistor$^{*13}$ | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| Sulfur | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 |
| Pastiness | Good | Good | Good | Poor | Good | Poor | Excellent | Excellent | Excellent | Excellent | Excellent | Excellent | Excellent | Excellent | Excellent | Excellent | Good | Poor | Poor | Excellent | Poor | Excellent | Poor | Excellent |
| Processability | 100 | 95 | 94 | 128 | 107 | 141 | 110 | 107 | 106 | 110 | 112 | 113 | 71 | 74 | 121 | 110 | 102 | 140 | 135 | 109 | 100 | 81 | 100 | 78 |
| Wear resistance | 100 | 103 | 104 | 110 | 106 | 107 | 125 | 127 | 118 | 126 | 131 | 135 | 117 | 124 | 140 | 131 | 111 | 103 | 106 | 126 | 100 | 121 | 100 | 123 |
| Low loss property | 100 | 95 | 94 | 80 | 85 | 88 | 61 | 59 | 72 | 62 | 54 | 49 | 70 | 61 | 45 | 54 | 76 | 87 | 79 | 60 | 100 | 87 | 100 | 85 |

The values of each formation in Table 2 are parts by mass per 100 parts by mass of the rubber component.

*1: Nipsil AQ, made by Tosoh Silica Corporation

*2: bis-[γ-(triethoxysilyl)-propyl]-tetrasulfide, Si69, made by Evonik Degussa

*3: diablack N234, made by Mitsubishi Chemical

*4: SBR#1723, made by JSR, 37.5 parts by mass of oil component compounded per 100 parts by mass of rubber component

*9: diphenylguanidine, Nocceler D, made by Ouchi Shinko Chemical Industrial Co., Ltd.

*10: benzothiazyl disulfide, Nocceler DM-P, made by Ouchi Shinko Chemical Industrial Co., Ltd.

*11: N-t-butyl-2-benzothiazylsulfenamide, Nocceler NS-P, made by Ouchi Shinko Chemical Industrial Co., Ltd.

*12: A/O MIX, made by Sankyo Yuka Kogyo K.K.

*13: N-(1,3-dimethylbutyl)-N'-phenyl-p-phenylenediamine

From the result of Table 2, it was understood that as compared to the samples of the rubber compositions of each comparative example, the samples of the rubber compositions of each example, which use a modified diene-based polymer included in the scope of this disclosure and use a glycerin fatty acid ester composition included in the scope of this disclosure, showed excellent result in each one of pastiness, processability, wear resistance and low loss property due to a synergy effect.

On the other hand, with respect to the comparative examples of which the diene-based polymer is excluded from the scope of this disclosure, there was a tendency of deterioration in wear resistance and low loss property, and with respect to the comparative examples, in which the presence/absence of glycerin fatty acid ester composition is excluded from the scope of this disclosure, there was a tendency of deterioration in pastiness and processability.

Further, it was understood that by adding an activator, it is possible to obtain more excellent processability.

According to the facts above, it was understood that the sample of the rubber composition of Example 1 of the present application has excellent low loss property and wear resistance.

INDUSTRIAL APPLICABILITY

According to this disclosure, it is possible to provide a rubber composition excellent in low loss property and wear resistance without deteriorating the processability, and by using such rubber composition to a tire, it is possible to improve the low loss property and the wear resistance of the tire without deteriorating the processability during production.

**Claims**

**1.** A rubber composition for a tire containing a rubber component having a diene-based polymer, a silica, and a glycerin fatty acid ester composition, wherein:

the diene-based polymer has 3 or more modified functional groups capable of interacting with the silica merely within a range of 1/4 of an entire chain length from a terminal, and has at least one monomer structural unit of a diene-based polymer among the modified functional groups; and

the glycerin fatty acid ester composition has a glycerin fatty acid monoester and a glycerin fatty acid diester of C8 to C28 fatty acids, and a content of the glycerin fatty acid ester composition is 0.5 to 15 parts by mass per 100 parts by mass of the rubber component,

and
wherein each modified functional group is nitrogen-containing functional group, silicon-containing functional group or oxygen-containing functional group.

2. The rubber composition for a tire according to claim 1, wherein:
a content of the silica is 60 to 250 parts by mass per 100 parts by mass of the rubber component.

3. The rubber composition for a tire according to claim 1 or 2, wherein:
the diene-based polymer has monomer structural units of the diene-based polymer at all points among the modified functional groups.

4. The rubber composition for a tire according to any one of claims 1 to 3, wherein:
a peak molecular weight of the diene-based polymer is 50,000 to 700,000.

5. The rubber composition for a tire according to any one of claims 1 to 4, wherein:
the diene-based polymer is generated by forming a molecular chain of a diene-based polymer without the modified functional groups, and forming a molecular chain including the functional groups and the monomer structural unit of the diene-based polymer.

6. The rubber composition for a tire according to claim 5, wherein:
the molecular chain including the functional groups and the monomer structural unit of the diene-based polymer is formed by alternatively or simultaneously adding a monomer component of the diene-based polymer and a modifier.

7. The rubber composition for a tire according to claim 5, wherein:
the molecular chain including the modified functional groups and the monomer structural unit of the diene-based polymer is formed by alternatively or simultaneously adding a monomer component of the diene-based polymer, and a compound having a site capable of copolymerizing with the monomer component and capable of chemically reacting with a modified functional group including compound and thereby introduced modified functional groups.

8. A tire using the rubber composition for a tire according to any one of claims 1 to 7.

**Patentansprüche**

1. Kautschukzusammensetzung für einen Reifen, die eine Kautschukkomponente enthält, die ein Polymer auf der Basis von Dien, ein Siliciumdioxid und eine Glycerinfettsäureesterzusammensetzung aufweist, wobei:

   das Polymer auf der Basis von Dien 3 oder mehr modifizierte funktionelle Gruppen aufweist, die in der Lage sind, mit dem Siliciumdioxid nur innerhalb eines Bereichs von 1/4 einer gesamten Kettenlänge von einem Terminal aus zu interagieren und mindestens eine strukturelle Monomereinheit eines Polymers auf der Basis von Dien unter den modifizierten funktionellen Gruppen aufweist; und
   die Glycerinfettsäureesterzusammensetzung einen Glycerinfettsäuremonoester und einen Glycerinfettsäurediester von C8- bis C28-Fettsäuren aufweist und der Gehalt der Glycerinfettsäureesterzusammensetzung 0,5 bis 15 Masseteile pro 100 Masseteile der Kautschukkomponente beträgt und
   wobei jede modifizierte funktionelle Gruppe eine stickstoffhaltige funktionelle Gruppe, eine siliciumhaltige funktionelle Gruppe oder eine sauerstoffhaltigen funktionelle Gruppe ist.

2. Kautschukzusammensetzung für einen Reifen nach Anspruch 1, wobei:
ein Gehalt des Siliciumdioxids 60 bis 250 Masseteile pro 100 Masseteile der Kautschukkomponente beträgt.

3. Kautschukzusammensetzung für einen Reifen nach Anspruch 1 oder 2, wobei:
das Polymer auf der Basis von Dien strukturelle Monomereinheiten des Polymers auf der Basis von Dien an allen Stellen unter den modifizierten funktionellen Gruppen aufweist.

4. Kautschukzusammensetzung für einen Reifen nach irgendeinem der Ansprüche 1 bis 3, wobei
ein Spitzenmolekulargewicht des Polymers auf der Basis von Dien 50.000 bis 700.000 beträgt.

5. Kautschukzusammensetzung für einen Reifen nach einem der Ansprüche 1 bis 4, wobei:

das Polymer auf der Basis von Dien durch Bilden einer molekularen Kette eines Polymers auf der Basis von Dien ohne die modifizierten funktionellen Gruppen und Bilden einer molekularen Kette, die die funktionellen Gruppen und die strukturelle Monomereinheit des Polymers auf der Basis von Dien umfasst; erzeugt wird.

**6.** Kautschukzusammensetzung für einen Reifen nach Anspruch 5, wobei:
die molekulare Kette, die die funktionellen Gruppen und die strukturelle Monomereinheit des Polymers auf der Basis von Dien umfasst durch alternatives oder gleichzeitiges Zugeben einer Monomerkomponente des Polymers auf der Basis von Dien und eines Modifiziermittels gebildet wird.

**7.** Kautschukzusammensetzung für einen Reifen nach Anspruch 5, wobei:
die molekulare Kette, die die modifizierten funktionellen Gruppen und die strukturelle Monomereinheit des Polymers auf der Basis von Dien umfasst, durch alternatives oder gleichzeitiges Zugeben einer Monomerkomponente des Polymers auf der Basis von Dien und einer Verbindung gebildet wird, die eine Stelle aufweist, die in der Lage ist, mit der Monomerkomponente zu copolymerisieren und in der Lage ist, chemisch mit einer modifizierten funktionellen Gruppe, die die Verbindung und dadurch eingeführte modifizierte funktionelle Gruppen umfasst, zu reagieren.

**8.** Reifen, bei dem die Kautschukzusammensetzung für einen Reifen nach einem der Ansprüche 1 bis 7 verwendet wird.

## Revendications

**1.** Composition de caoutchouc pour un pneumatique contenant un composant de caoutchouc présentant un polymère à base de diène, une silice, et une composition d'ester d'acide gras de glycérine, où:

le polymère à base de diène présente 3 groupes fonctionnels modifiés ou plus capables d'interaction avec la silice simplement à l'intérieur d'une plage de 1/4 d'une longueur de chaîne entière à partir d'une terminaison, et présente au moins un motif structurel monomère d'un polymère à base de diène parmi les groupes fonctionnels modifiés; et
la composition d'ester d'acide gras de glycérine possède un monoester d'acide gras de glycérine et un diester d'acide gras de glycérine d'acides gras en C8 à C28, et une teneur de la composition d'ester d'acide gras de glycérine étant de 0,5 à 15 parties en masse pour 100 parties en masse du composant de caoutchouc, et
où chaque groupe fonctionnel modifié est un groupe fonctionnel contenant de l'azote, un groupe fonctionnel contenant du silicium ou un groupe fonctionnel contenant de l'oxygène.

**2.** Composition de caoutchouc pour un pneumatique selon la revendication 1, dans laquelle:
une teneur de la silice est de 60 à 250 parties en masse pour 100 parties en masse du composant de caoutchouc.

**3.** Composition de caoutchouc pour un pneumatique selon la revendication 1 ou 2, dans laquelle:
le polymère à base de diène possède des motifs structurels monomères du polymère à base de diène à tous les points parmi les groupes fonctionnels modifiés.

**4.** Composition de caoutchouc pour un pneumatique selon l'une quelconque des revendications 1 à 3, dans laquelle:
un poids moléculaire pic du polymère à base de diène est de 50 000 à 700 000.

**5.** Composition de caoutchouc pour un pneumatique selon l'une quelconque des revendications 1 à 4, dans laquelle:
le polymère à base de diène est généré en formant une chaîne moléculaire d'un polymère à base de diène sans les groupes fonctionnels modifiés, et en formant une chaîne moléculaire comprenant les groupes fonctionnels et le motif structurel monomère du polymère à base de diène.

**6.** Composition de caoutchouc pour un pneumatique selon la revendication 5, dans laquelle:
la chaîne moléculaire comprenant les groupes fonctionnels et le motif structurel monomère du polymère à base de diène est formée par addition alternativement ou simultanément d'un composant monomère du polymère à base de diène et d'un agent de modification.

**7.** Composition de caoutchouc pour un pneumatique selon la revendication 5, dans laquelle:
la chaîne moléculaire comprenant les groupes fonctionnels modifiés et le motif structurel monomère du polymère à base de diène est formé par addition alternativement ou simultanément d'un composant monomère du polymère à base de diène, et d'un composé présentant un site capable de copolymérisation avec le composant monomère

et capable de réagir chimiquement avec un groupe fonctionnel modifié comprenant le composé et ainsi les groupes fonctionnels modifiés introduits.

**8.** Pneumatique utilisant la composition de caoutchouc pour un pneumatique selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014098155 A1